# EUROPEAN PATENT SPECIFICATION

(11) **EP 3 432 622 B1**
(45) Date of publication and mention of the grant of the patent: **25.03.2020**
(21) Application number: 17181888.3
(22) Date of filing: 18.07.2017
(51) Int. Cl.: H04W 12/02, H04W 12/08, H04W 84/18, H04W 4/70, H04W 12/00

(54) **SECURE DEVICES AND METHODS FOR LPWA COMMUNICATION NETWORKS**
SICHERE VORRICHTUNGEN UND VERFAHREN FÜR LPWA-KOMMUNIKATIONSNETZWERKE
DISPOSITIF DE COMMUNICATION ET PROCÉDÉ DE COMMUNICATION RADIO

(43) Date of publication of application: 23.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- US-B1- 8 458 800
- AHMED Z ET AL: "Configurable network for mobile system", ELECTRICAL, ELECTRONIC AND COMPUTER ENGINEERING, 2004. ICEEC '04. 2004 INTERNATIONAL CONFERENCE ON CAIRO, EGYPT 5-7 SEPT. 2004, PISCATAWAY, NJ, USA,IEEE, 5 September 2004 (2004-09-05), pages 667-670, XP010753485, DOI: 10.1109/ICEEC.2004.1374563 ISBN: 978-0-7803-8575-7
- KHAN ATHAR ALI ET AL: "Cognitive-Radio-Based Internet of Things: Applications, Architectures, Spectrum Related Functionalities, and Future Research Directions", IEEE WIRELESS COMMUNICATIONS, vol. 24, no. 3, 22 June 2017 (2017-06-22), pages 17-25, XP011654512, ISSN: 1536-1284, DOI: 10.1109/MWC.2017.1600404 [retrieved on 2017-06-22]
- TSAO R ALEXANDER COOPER POWER SYSTEMS M DOHLER CTTC V DAZA A LOZANO UNIVERSITAT POMPEU FABRA T: "A Security Threat Analysis for Routing over Low-Power and Lossy Networks; draft-ietf-roll-security-threats-03.txt", A SECURITY THREAT ANALYSIS FOR ROUTING OVER LOW-POWER AND LOSSY NETWORKS; DRAFT-IETF-ROLL-SECURITY-THREATS-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 26 June 2013 (2013-06-26), pages 1-48, XP015094881,

## Description

### TECHNICAL FIELD

In general, the invention relates to wireless communication networks. More specifically, the invention relates to secure devices, methods and systems for wireless communication networks based on Low-Power Wide-Area (LPWA) technology, in particular narrowband (NB) IoT communication networks.

### BACKGROUND

Narrowband IoT (NB IoT) is a new technology standard, designed to broaden the future of IoT connectivity. Ratified by the 3GPP, NB IoT is starting to being deployed by mobile network operators across the globe. NB IoT is a Low-Power Wide-Area (LPWA) network technology, developed to enable efficient communication for mass distributed NB IoT communication devices across wide geographical footprints as well in scenarios with deep indoor penetration, e.g. within urban infrastructure. It's ideal for devices that generate low data traffic, rely on batteries and typically have a long device life cycle. A battery life of more than 10 years can be supported for a wide range of use cases. Moreover, NB IoT significantly improves the system capacity and spectrum efficiency, especially in deep coverage. Thus, NB IoT can be used to connect simple communication devices, such as sensors, to drive new data streams, reduce operational costs and create new business models. Smart Meters, Smart Bins, environmental monitoring and precision agriculture are just a few applications of NB IoT. Such devices are also referred to as NB IoT cellular devices. More information about NB IoT can be found in the 3GPP technical report TR 45.820.

Due to the generally limited hardware resources of a communication device based on LPWA technology and, in particular, NB IoT technology, security mechanisms known, for instance, from smart phones cannot be used for such a communication device. Thus, there is a need for improved devices, methods and systems for wireless communication networks based on LPWA technology, in particular narrowband IoT networks.

Ahmed et al: "Configurable network for mobile system", Electrical, Electronic, and Computer Engineering, 2004, ICEEC 04, 5 September 2004, pages 667-670, XP010753485 describe mobile ad-hoc networks (MANET) defined by a plurality of mobile communication units as well as different MANET routing protocols. A routing protocol is suggested, which takes into account the remaining battery level of neighbouring mobile communication units. In the context of Cognitive-Radio-Based (CRB) IoT systems a similar routing protocol is suggested in Khan et al: "Cognitive Radio-Based Internet of Things: Applications, Architectures, Spectrum Related Functionalities, and Future Research Directions", IEEE Wireless Communications, vol. 24, no. 3, pages 17-25, XP011654512.

### SUMMARY OF THE INVENTION

It is an object of the invention to provide improved devices, methods and systems for wireless communication networks based on LPWA technology, in particular narrowband IOT networks.

The foregoing and other objects are achieved by the subject matter of the independent claims. Further implementation forms are apparent from the dependent claims, the description and the figures.

Embodiments of the present invention relate to communication devices that use NB IoT technology. Although the description is written by using the NB IoT as the access technology, the embodiments are applicable also for communication devices that use other wireless communication technologies as well, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system. As used herein, NB IoT technology can comprises, for instance, narrowband LTE, narrowband M2M, and narrowband OFDMA techniques.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention a communication device may include a processor. The processor may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor control unit may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

In embodiments of the present invention, the communication device can be a wearable device, a sensor, small device, a mobile device, and/or any other device, which may be, for example, powered by a battery and/or any other power source having a limited capacity.

In embodiments of the present invention, the communication device can be configured to communicate over one or more narrowband channels, for example, channels with a channel bandwidth of about 200 Kilohertz (KHz). In embodiments of the invention a minimum system bandwidth of 200 kHz on both downlink and uplink can be used. In each direction, the 200 kHz channel can be divided into narrow bandwidth subcarriers, for instance, 48 on the downlink and 36 on the uplink. In the downlink direction, Orthogonal Frequency Division Multiple Access (OFDMA) can be used. In the uplink direction Frequency Division Multiple Access (FDMA) can be used.

More specifically, according to a first aspect the invention relates to a communication device for communicating data over a low power wide area, LPWA, communication network as disclosed by claim 1.

Thus, the communication device according to the first aspect provides a secure proxy or relay communication device, which allows extending communication between neighbouring communication devices and a base station over one or more hops by taking into account the respective security credibility of the neighbouring communication devices (i.e. whether or not a specific neighbouring communication device can be considered to be secure and, thus, trustworthy). Thus, the communication device according to the first aspect can be considered to establish local subnetworks and, thereby, to extend the original coverage of the radio access network of the LPWA communication network.

In an embodiment, the communication device is configured to communicate over a narrowband loT communication network. The security system can be implemented in hardware and/or software. In an embodiment, the security system can be implemented using virtualization techniques. In an embodiment, the processor, the memory and the radio are implemented as a system on a chip. The memory can comprise a RAM, a ROM and/or a Flash memory.

In a further possible embodiment of the communication device, the processor security domain and the memory security domain of the first set of security domains are further configured to interact with each other to authenticate the communication device within the LPWA communication network. According to an embodiment a cryptographic authentication key can be stored in the memory security domain of the first set of security domains and can be used by the processor security domain of the first set of security domains for authenticating the communication device within the LPWA communication network.

In a further possible embodiment of the communication device the security system is further configured to restrict access to the radio to one or more selected sets of the one or more sets of security domains, including the first set of security domains, in particular the processor security domain of the first set of security domains.

In a further possible embodiment of the communication device the one or more logically separated sets of security domains includes a second set of security domains on the processor and the memory, wherein the processor security domain and the memory security domain of the second set of security domains are configured to interact with each other to authenticate the communication device within the LPWA communication network. In an embodiment the security system can be configured to restrict access to the first set of security domains to a first entity, for instance, the user and/or owner of the communication device and to restrict access to the second set of security domains to a second entity, for instance, the operator of the LPWA communication network. In an embodiment the security system can be configured to restrict access to the first set of security domains to the first entity on the basis of a first set of access control rules and to restrict access to the second set of security domains to the second entity on the basis of a second set of access control rules, wherein the second set of access control rules differs from the first set of access control rules.

Thus, the control of the respective sets of security domains can be "assigned" to one or more parties, such as the manufacturer of the communication device, the user of the communication device and/or a third party, for instance, the operator of the LPWA communication network. For routing the message flow from communication devices that are out of coverage at least the mobile network operator should be able to control the first set of security domains. However, in embodiments of the invention, the control of the respective sets of security domains can be shared by more than one party, wherein each party can control one or more specific functions implemented by the respective sets of security domains.

In a further possible embodiment of the communication device the processor is configured to implement a real-time execution environment based on a real-time operating system, wherein the security system is configured to operate the respective processor security domains of the one or more sets of security domains in parallel to the real-time execution environment. Thus, the one or more processor security domains are being executed independently from an NB loT application, such as a sensor application for collecting senor data, which runs on the real-time execution environment implemented by the processor. Moreover, the security processor domains are protected from manipulations (malware) occurring in the real-time execution environment.

In a further possible embodiment of the communication device the memory comprises in addition to the respective memory security domains of the one or more sets of security domains a real-time memory portion that is configured to be accessible from the real-time execution environment and the respective processor security domains of the one or more sets of security domains.

In a further possible embodiment of the communication device the routing scheme stored in the memory security domain of the first set of security domains is further based on information about a respective remaining power status, e.g. battery status of the respective neighbouring communication devices.

In a further possible embodiment of the communication device the routing scheme stored in the memory security domain of the first set of security domains is further based on information about a respective geographical location of the respective neighbouring communication devices.

In an embodiment the processor security domain of the first set of security domains is configured to determine the respective security credibility of a respective neighbouring communication device on the basis of an authentication token received from the respective neighbouring communication device. In an embodiment the authentication token can be based on a cryptographic secret shared between the communication device and the respective neighbouring communication device.

In a further possible embodiment of the communication device the communication device further comprises a basis scheduling plan stored in the memory security domain of the first set of security domains, wherein the communication device is configured to be operated alternatively in a sleep mode and an active mode and wherein the basis scheduling plane defines one or more time windows, when the communication device operates in the active mode.

In a further possible embodiment of the communication device, the communication device further comprises a rescheduling plan stored in the memory security domain of the first set of security domains, wherein the communication device is configured to be operated alternatively in a sleep mode and an active mode and wherein the rescheduling plane defines one or more time windows, when the communication device operates in the active mode in order to be able to receive a new basis scheduling plane generated by a network management entity.

According to a second aspect the invention relates to a corresponding method of operating a communication device for communicating data over a low power wide area, LPWA, communication as disclosed by claim 12.

According to a third aspect the invention relates to a computer program product comprising program code for performing the method according to the second aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a NB loT communication network comprising several communication devices according to an embodiment;
Fig. 2 shows a more detailed schematic diagram of a communication device according to an embodiment; and
Fig. 3 shows a diagram illustrating a method for operating a communication device according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

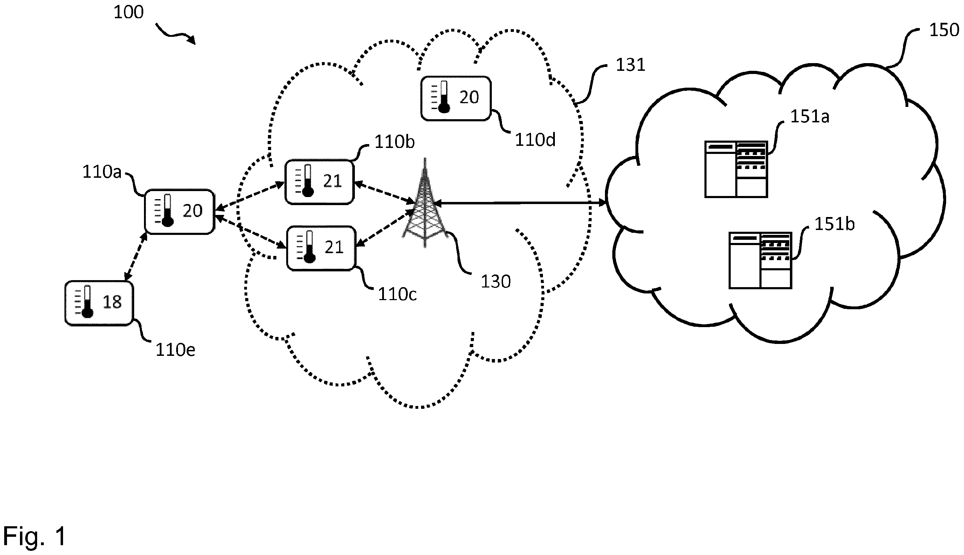

Figure 1 shows a schematic diagram of a cellular communication network 100. The cellular communication network 100 is a low-power wide-area (LPWA) communication network 100, in particular a LPWA communication network 100 based on narrowband (NB) loT technology, as described, for instance, in the 3GPP technical report TR 45.820.

The cellular communication network 100 comprises a radio access network 131, a core network 150 and a plurality of NB IoT communication devices 110a-e. In the exemplary embodiment shown in figure 1, the plurality of NB IoT communication devices 110a-e are smart temperature sensors configured to monitor temperature data and to provide the temperature data via the radio access network 131 and the core network 150 of the NB IoT communication network 100 to a remote server configured to collect and analyze the temperature data from the plurality of NB IoT communication devices 110a-e.

For the sake of clarity figure 1 shows only a single exemplary base station 130, which is part of the radio access network 131. In other embodiments the radio access network 131 comprises a plurality of base stations similar to the exemplary base station 130 shown in figure 1.

The core network 150 comprises entities or functions for operating the NB IoT communication network 100. In the exemplary embodiment, shown in figure 1 the core network 150 comprises an authentication entity 151a configured to perform an authentication procedure with each of the NB IoT communication devices 110a-e before granting full access to the NB IoT communication network 100. Moreover, the core network comprises a network management entity 151b configured to provide the NB IoT communication devices 110a-e with a routing scheme for routing messages received from neighbouring NB IoT communication devices 110a-e, as will be described in more detail further below.

As illustrated in figure 1, by way of example the NB IoT communication devices 110b, 110c and 110d are within the coverage (i.e. "in coverage") of the radio access network 131, whereas the NB IoT communication devices 110a and 110e are "out-of-coverage" of the radio access network 131 and, therefore, cannot communicate directly with the base station 130. As will be described in more detail further below, the out-of-coverage NB IoT communication devices 110a and 110e are configured to communicate with the base station 130 using a single or multi hop routing scheme via, for instance, the in-coverage NB IoT communication devices 110b and/or 110c, as illustrated in figure 1.

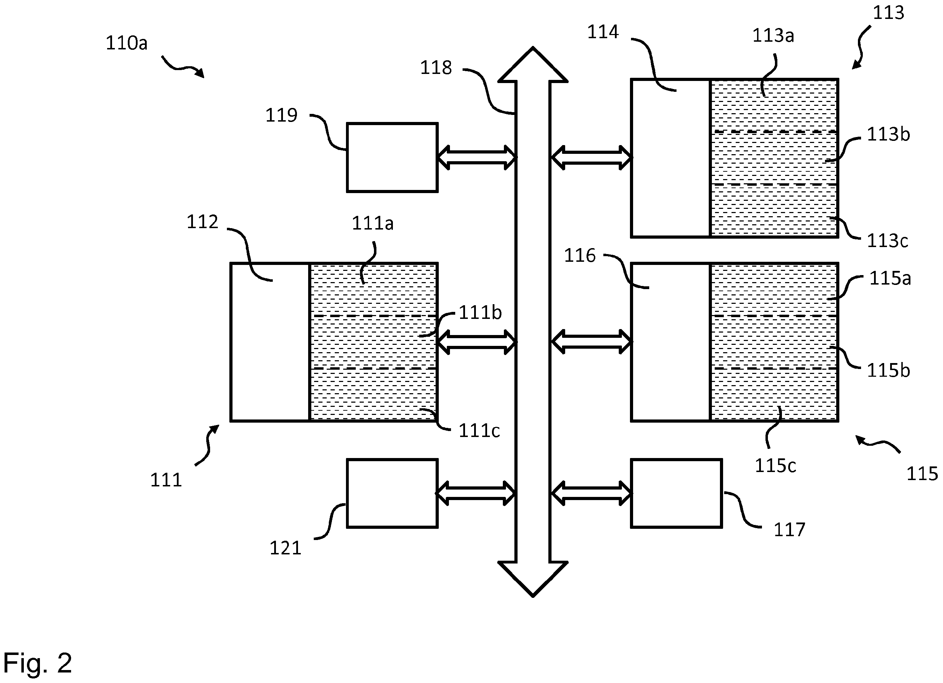

Under further reference to figure 2 in the following an embodiment of the NB IoT communication device 110a will be described. The communication device 110a comprises a processor 111 configured to process data and running different applications, including security applications providing one or more security functions, a memory comprising a RAM 113 and a Flash memory 115 configured to store volatile and non-volatile data (in particular executable application code), respectively, and a radio 117 configured to transmit and/or receive data over the NB IoT communication network 100. In an embodiment, the radio 117 can be configured to communicate with the neighboring communication devices 110b-e using known D2D communication techniques. In an embodiment, the radio 117 can be configured to use one or more subcarriers of a channel bandwidth of about 200 Kilohertz (KHz) to communicate with the base station 130 on the basis of an OFDMA scheme in the downlink direction and on the basis of a FDMA scheme in the uplink direction. Alternatively or in addition to the Flash memory 115 the communication device 110a can comprise a ROM as well.

In an embodiment, the processor 111, the RAM 113, the Flash memory 115 and/or the radio 117 can be implemented as a system on a chip. As illustrated in figure 2, in an embodiment the communication device 110a further comprises a communication bus system 118 configured to provide for the flow of data between the processor 111, the RAM 113, the Flash memory 115 and the radio 117.

The processor 111 is configured to route the data received from neighbouring communication devices 110b-e to other neighbouring communication devices 110b-e and/or the base station 130 of the LPWA communication network 100 on the basis of a routing scheme stored in the Flash memory 115, wherein the routing scheme is based on information about a respective security credibility of the respective neighbouring communication devices 110b-e. In an embodiment, the processor 111 is configured to check the respective security credibility of a respective neighbouring communication device 110b-e on the basis of an authentication token received from the respective neighbouring communication device 110b-e. For instance, in the exemplary scenario shown in figure 1, the routing scheme stored in the Flash memory 115 of the communication device 110a could define that data received from the neighbouring communication device 110e is routed via the other neighbouring communication device 110b (instead of the neighbouring communication device 110c) to the base station 130, in case the communication device has received a valid authentication token from the neighbouring communication device 110b, but not from the neighbouring communication device 110c. The authentication token can be part of the message to be routed by the communication device 110a. In an embodiment, the processor 111 can be configured to check the validity of a respective authentication token on the basis of a common secret, such as a cryptographic key or key pair, stored in the Flash memory 115 and possibly shared between the communication devices 110a-e.

In an embodiment, the communication device 110a further comprises a security system configured to operate one or more sets of logically separated security domains 111a-c, 113a-c, 115a-c on the processor 111, the volatile RAM 113 and the non-volatile Flash memory 115. By way of example, in the embodiment shown in figure 2 the security system of the communication device 110a operates three different sets of security domains, namely a first set of security domains, comprising a processor security domain 111a, a RAM security domain 113a and a Flash memory security domain 115a, a second set of security domains, comprising a processor security domain 111b, a RAM security domain 113b and a Flash memory security domain 115b, and a third set of security domains, comprising a processor security domain 111c, a RAM security domain 113c and a Flash memory security domain 115c.

The respective security domains of a set of security domains, for instance, the processor security domain 111a, the RAM security domain 113a and the Flash memory security domain 115a of the first set of security domains are logically separated from the security domains of other sets of security domains and are configured to interact with each other to provide at least one respective security function.

In the embodiment shown in figure 2 the processor security domain 111a, the RAM security domain 113a and the Flash memory security domain 115a of the first set of security domains are configured to interact with each other to route the data received from neighbouring communication devices, for instance, the data received from neighboring communication devices 110b-e to other neighbouring communication devices 110b-e and/or the base station 130 of the LPWA communication network 100 on the basis of the routing scheme stored in the Flash memory security domain 115a. In the exemplary scenario shown in figure 1, the processor security domain 111a, the RAM security domain 113a and the Flash memory security domain 115a of the first set of security domains are configured to interact with each other to route, for instance, the data received from the neighboring communication device 110e to the neighboring communication device 110b and/or the neighboring communication device 110c on the basis of the routing scheme stored in the Flash memory security domain 115a.

In an embodiment, the processor security domain 111a, the RAM security domain 113a and the Flash memory security domain 115a of the first set of security domains are further configured to interact with each other to authenticate the communication device 110a within the LPWA communication network 100 and, thus, to provide the communication device 110a with an authentication function. In another embodiment, the authentication function can be implemented in a different set of security domains of the security system, for instance, in the second set of security domains 111b, 113b and 115b. Thus, in an embodiment, the processor security domain 111b, the RAM security domain 113b and the Flash memory security domain 115b of the second set of security domains are configured to interact with each other to authenticate the communication device 110a within the LPWA communication network 100.

The security system of the communication device 110 shown in figure 2 can be further configured to restrict access to the radio 117 to one or more selected sets of the one or more sets of security domains. In the embodiment shown in figure 2 the security system can be configured to restrict access to the radio 117 to the first set of security domains only, i.e. only the processor security domain 111a of the first set of security domains can access the radio 117 and interact therewith, for instance, for transmitting data over the NB loT communication network 100. In another embodiment, the security system of the communication device 110 shown in figure 2 can be configured to allow the first and the second set of security domains access to the radio 117, but not the third set of security domains.

In an embodiment, the communication device 110a can further comprise a sensor 119 configured to collect data, wherein the security system of the communication device 110a is further configured to restrict access to the sensor 119 to one or more selected sets of the three sets of security domains 111a-c, 113a-c, 115a-c. For example, the security system can be configured to restrict access to the sensor 119 to the first set of security domains 111a, 113a, 115a and/or the second set of security domains 111b, 113b, 115b.

In addition or alternatively, in an embodiment the communication device 110a further comprises an actuator 121, wherein the security system of the communication device is further configured to restrict access to the actuator 121 to one or more selected sets of the three sets of security domains 111a-c, 113a-c, 115a-c. For example, the security system can be configured to restrict access to the actuator 121 to the first set of security domains 111a, 113a, 115a and/or the third set of security domains 111c, 113c, 115c.

The security system of the communication device 110a shown in figure 2 can be implemented in hardware and/or software. In an embodiment, the security system can be implemented using virtualization techniques. In an embodiment, the different RAM security domains 113a-c can be provided by different partitions of the RAM 113. In an embodiment, the data in the different RAM security domains 113a-c are accessible using "memory mapped I/O". As will be appreciated, the main purpose of the security system of the communication device 110a and its security domains is to isolate the processing of security critical tasks from standard processing. This can be achieved by using a single processor-core having two execution modes, one secure mode and another mode for standard processes. In this case the RAM and registers assigned to the single core are duplicated and one set is assigned to the normal mode, i.e. the real-time execution environment, and the other set to the secure execution mode, i.e. the secure execution environment. According to another embodiment, the security system of the communication device 110a and its security domains can be implemented using a multiprocessor-core architecture with at least one secure-core with an own RAM, which is dedicated to executing only security-critical processes.

As mentioned above and illustrated in figure 2, the processor 111 can be configured to implement a real-time execution environment 112 based on a real-time operating system. An application running in the real-time execution environment 112 can access the security functions provided by the different sets of security domains, if the application has the corresponding access rights. In the embodiment shown in figure 2, the security system of the communication device 110a is configured to operate the respective processor security domains 111a-c of the three sets of security domains in parallel to the real-time execution environment 112.

In an embodiment, both the RAM 113 and the Flash memory 115 can comprises in addition to the respective RAM security domains 113a-c and the Flash memory security domains 115a-c a real-time RAM portion 114 and a real-time Flash memory portion 116, which can be accessed from the real-time execution environment 112 of the processor and the respective processor security domains 111a-c of the three sets of security domains.

For providing the authentication function the Flash memory security domain 115a of the first set of security domains can store a cryptographic authentication key for authenticating the communication device 110a with the authentication entity 151 of the core network 150 of the NB loT communication network 100. In an embodiment, the security system of the communication device 110a is configured such that only the corresponding processor security domain 111a (i.e. a secure application running therein) can retrieve the cryptographic authentication key stored in the Flash memory security domain 115a of the first set of security domains and use this key for authenticating the communication device 110a.

As already mentioned above, one or more of the sets of security domains operated by the security domains can be configured to provide additional security functions besides the routing function provided by the first set of security domains. For instance, one or more of the sets of security domains could be configured to provide a security function in form of an end-to-end encryption of the data collected by the sensor 119 of the communication device 110a and/or a security function in form of a firewall configured to filter data being received and/or being transmitted via the radio 117 on the basis of a set of filter rules. For instance, the Flash memory security domain 115b of the second set of security domains could store a cryptographic encryption key used by a secure application running in the processor security domain 111b of the second set of security domains for providing an end-to-end data encryption. By way of example, the Flash memory security domain 115c of the third set of security domains could store a set of filter rules used by a secure application running in the processor security domain 111c of the third set of security domains for filtering data being received and/or being transmitted via the radio 117 of the communication device 110a.

In a further embodiment, the security system of the communication device 110a can be configured to restrict access to the first set of security domains 111a, 113a, 115a to a first entity only, for instance, the operator of the NB loT communication network 100, and to restrict access to the second set of security domains 111b, 113b, 115b to a second entity only, for instance, the user of the communication device 110a. To this end, the security system can comprise for each set of security domains a corresponding set of access control rules, which can differ from set to set. In an embodiment, the access control rules could allow access to the third set of security domains 111c, 113c, 115c to both the first entity and the second entity. In other words, in an embodiment, a set of security domains, for instance, the third set of security domains 111c, 113c, 115c can be shared by the first entity and the second entity.

In an embodiment, the routing scheme stored in the Flash memory security domain 115a of the first set of security domains is further based on information about a respective remaining power status, in particular remaining battery power of the respective neighbouring communication devices 110b-e. For instance, in the exemplary scenario shown in figure 1, the routing scheme stored in the Flash memory security domain 115a of the communication device 110a could define that data received from the neighbouring communication device 110e is routed via the other neighbouring communication device 110b (instead of the neighbouring communication device 110c) to the base station 130, in case the remaining battery power of the neighbouring communication device 110b is larger than the remaining battery power of the neighbouring communication device 110c.

Additionally, the routing scheme stored in the Flash memory security domain 115a of the first set of security domains can be based on information about a respective geographical location of the respective neighbouring communication devices 110b-e. For instance, in the exemplary scenario shown in figure 1, the routing scheme stored in the Flash memory security domain 115a of the communication device 110a could define that data received from the neighbouring communication device 110e is routed via the other neighbouring communication device 110b (instead of the neighbouring communication device 110c) to the base station 130, in case the neighbouring communication device 110b is at a geographical location relative to the base station 130 with less signal attenuation than at the geographical location of the neighbouring communication device 110c.

The above kind of information about the remaining battery power, the geographical location and/or the security credibility of the neighboring communication devices 110b-e can be collected by the communication device 110a on the basis of data received from the neighbouring communication devices 110b-e. Additionally or alternatively, this kind of information can be collected and provided by the remote network management entity 151b. In an embodiment, the processor security domain 111a of the first set of security domains 111a, 113a, 115a is configured to dynamically adjust the routing scheme stored in the Flash memory security domain 115a on the basis of such kind of information received from the neighbouring communication devices 110b-e and/or the remote network management entity 151b of the LPWA communication network 100.

As shown in the exemplary scenario of figure 1, some of the communication devices 100a-e are in-coverage of the base station 130, whereas some are out-of-coverage. In an embodiment, each communication device 110a-e comprises a basis scheduling plan, which defines, when each communication device 110a-e should be active, i.e. able to transmit and/or receive data from and to neighbouring communication devices 110a-e. In an embodiment, the basis scheduling plan is stored in the Flash memory security domain 115a of the first set of security domains, wherein the communication device 110a is configured to be operated alternatively in a sleep mode or an active mode and wherein the basis scheduling plane defines one or more time windows, when the communication device 110a operates in the active mode. In an embodiment, the basis scheduling plane is generated and provided by the network management entity 151b, which has access to one or more of the above kinds of information, namely the respective remaining battery power of the communication devices 110a-e, the respective geographical location of the communication devices 110a-e and/or the respective security credibility of the communication devices 110a-e. In order to be able to operate according to its basis scheduling plan the communication device 100a can further comprise an internal clock that can be synchronized. This allows making sure that all communication devices 110a-e are synchronized, when operating according to the basis scheduling plan. According to an embodiment, each communication device 100a-e can be synchronized by the base station 130, either directly, when in coverage, or indirectly via another communication device, when out of coverage. By way of example, an exemplary basis scheduling plan could define the in-coverage and out-of-coverage communication devices 110a-e to operate every day for 5 minutes at a certain time.

According to an embodiment, one or more of the communication devices 110a-e can be dedicated proxy devices, i.e. a communication device, which in accordance with the basis scheduling plane is always available for routing data. In an embodiment, the remote network management entity 151b can be configured to select one or more of the communication devices 110a-e to be dedicated proxy devices. In an embodiment, the network management entity 151b can select one or more of the communication devices 110a-e, which are located in areas of poor coverage, to be dedicated proxy devices and, thus, allow further out-of-coverage communication devices in the vicinity thereof to communicate with the base station 130. Alternatively or additionally, the network management entity 151b can be configured to select those communication devices 110a-e as dedicated proxy devices, which have a substantially unlimited amount of remaining power, for instance, communication devices 110a-e having an external power source, such as, NB loT communication devices implemented in street lighting infrastructure or smart metering devices.

The operator of the NB IoT communication network 100 could provide incentives for communication devices 110a-e having an increased power/battery capacity. For instance, the operator of the NB IoT communication network 100 could provide communication services at reduced costs for a communication device 110a-e having an increased power/battery capacity so that this communication device 110a-e can be designated as a dedicated proxy device.

In case a communication device 110a-e used as a dedicated proxy only has a limited amount of battery power left, the routing scheme can be adapted by the remote network management entity 151b in such a way that the corresponding communication device 110a-e will no longer be used as dedicated proxy device.

For using a neighbouring communication device, such as the neighbouring communication devices 110b and 110c shown in figure 1, and a portion of its battery power and bandwidth the communication device 100a, in turn, could allow to offer a corresponding portion of its battery power and/or bandwidth for routing data received from the corresponding neighbouring communication devices 110b and 110c. According to an embodiment the operator of the NB loT communication network 100 could offer incentives for a communication device 110a-e acting as a router, such as lower communication costs.

As each communication device 110a-e can lose its coverage, for instance, by being moved out of the coverage area of the base station 130 or by a change of the coverage area of the basis station 130 (for instance, because of a larger attenuation due to changes of the building the respective communication device 110a is located in) according to an embodiment, each communication device 110a-e further comprises a rescheduling plan, which allows a communication device 110a-e that has lost its direct connection with the base station 130 to communicate therewith via one or more neighbouring communication devices 110a-c. According to an embodiment, the rescheduling plan can be generated and managed by a network management entity 153 located in the core network 150 of the NB loT communication network 100. The rescheduling plan defines one or more recurring time windows, when the respective communication device 110a-e should be active, i.e. able to transmit and/or receive data. According to an embodiment, the rescheduling plan for a respective communication device 110a-e can be generated on the basis of one or more of the following parameters: neighbouring communication devices, which serve as dynamic and dedicated proxies, i.e. neighbouring communication devices 110a-e configured to route incoming data to another neighbouring communication device 110a-e or the base station 130 (these dedicated proxy devices could be operated by the operator of the NB loT communication network 100); the basis scheduling plan implemented in the communication devices 110a-e; the internal clock drift of the communication devices 110a-e (in an embodiment, the rescheduling plan could define longer time windows for communication devices 110a-e having a larger clock drift); further parameters, such as the geographical location of the respective communication device 110a-e, previous coverage classes of the respective communication device 110a-e, a setting that a respective communication device 110a-e is allowed to act as a proxy device (such a setting can be made by the owner of the respective communication device 110a-e).

According to an embodiment, the rescheduling plane for a respective communication device 110a-e can be updated, if one or more of these parameters change. Preferably, only the changes with respect to the previous rescheduling plane (i.e. a differential rescheduling plane) a provided, for instance, by the network management entity 151b to the respective communication device 110a-e.

For including a new communication device, for instance, the communication device 110e shown in figure 1, having no basis scheduling plane into the NB loT communication network 100 embodiments of the invention contemplate an a priori scheme or an a posteriori scheme.

In embodiments based on an a priori scheme the communication devices 110a-d in the vicinity of the new communication device 110e are triggered to be active during a time window, when the new communication device 110a is to be included in the NB IoT communication network 100. To this end, in an embodiment, the remote network management entity 151b can adjust the basis scheduling plan correspondingly and distribute the adjusted basis scheduling plan to the communication devices 110a-d.

In embodiments based on an a posteriori scheme a rescheduling plane can be pre-stored in the new communication device 110e, wherein the rescheduling plane is based on the geographical location, where the new communication device 110e is to be included in the NB loT communication network 100, and the communication devices 110a-d in the vicinity thereof. Such embodiments can be advantageous in case there are many communication devices 110a-d in the vicinity of the new communication device 110e, which allow the new communication device 110e to communicate with the base station 130. Once installed at its intended geographical location the new communication device 110e will be active during the time window(s) defined by the rescheduling plan and, thus, will become part of the NB IoT communication network 100, for instance, by downloading a basis scheduling plane from the network management entity.

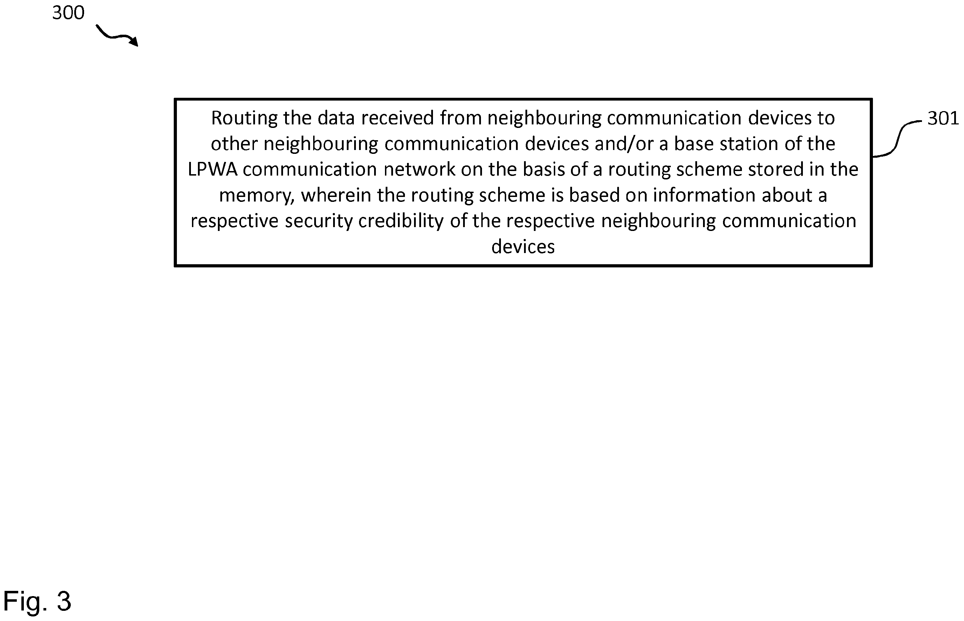

Figure 3 shows a diagram illustrating a corresponding method 300 of operating the communication device 110a. The method 300 comprises the step 301 of routing the data received from neighbouring communication devices 110b-e to other neighbouring communication devices 110b-e and/or the base station 130 of the LPWA communication network 100 on the basis of a routing scheme stored in the memory 113, 115, wherein the routing scheme is based on information about a respective security credibility of the respective neighbouring communication devices 110b-e.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein.

## Claims

1. A communication device (110a) for communicating data over a low power wide area, LPWA, communication network (100), wherein the communication device (110a) comprises:
a processor (111) configured to process data;
a memory (113, 115) configured to store data;
a radio (117) configured to receive data from and transmit data to neighbouring communication devices (110b-e) and/or a base station (130); and
a security system configured to operate one or more sets of logically separated security domains (111a-c, 113a-c, 115a-c), including a first set of security domains (111a, 113a, 115a), on the processor (111) and the memory (113, 115), wherein each set of security domains comprises a processor security domain (111a-c) and a memory security domain (113a-c, 115a-c);
wherein the processor security domain (111a) of the first set of security domains (111a, 113a, 115a) is configured to route the data received from neighbouring communication devices (110b-e) to other neighbouring communication devices (110b-e) and/or the base station (130) of the LPWA communication network (100) on the basis of the routing scheme stored in the memory security domain (113a, 115a) of the first set of security domains (111a, 113a, 115a) and wherein the routing scheme is based on information about a respective security credibility of the respective neighbouring communication devices (110b-e) and
wherein the processor security domain (111a) of the first set of security domains (111a, 113a, 115a) is configured to dynamically adjust the routing scheme stored in the memory security domain (113a, 115a) of the first set of security domains (111a, 113a, 115a) on the basis of information received from the neighbouring communication devices (110b-e) and/or a network management entity (151b) of the LPWA communication network (100).

2. The communication device (110a) of claim 1, wherein the processor security domain (111a) and the memory security domain (113a, 115a) of the first set of security domains (111a, 113a, 115a) are further configured to interact with each other to authenticate the communication device (110a) within the LPWA communication network (100).

3. The communication device (100a) of claim 1 or 2, wherein the security system is further configured to restrict access to the radio (117) to one or more selected sets of the one or more sets of security domains (111a-c, 113a-c, 115a-c), including the first set of security domains (111a, 113a, 115a).

4. The communication device (110a) of claim 1, wherein the one or more sets of logically separated security domains (111a-c, 113a-c, 115a-c) includes a second set of security domains (111b, 113b, 115b) on the processor (111) and the memory (113, 115) and wherein the processor security domain (111b) and the memory security domain (113b, 115b) of the second set of security domains (111b, 113b, 115b) are configured to interact with each other to authenticate the communication device (110a) within the LPWA communication network (100).

5. The communication device (110a) of any one of claims 1 to 4, wherein the processor (111) is configured to implement a real-time execution environment (112) based on a real-time operating system and wherein the security system is configured to operate the respective processor security domains (111a-c) of the one or more sets of security domains (111 a-c, 113a-c, 115a-c) in parallel to the real-time execution environment (112).

6. The communication device (110a) of claim 5, wherein the memory (113, 115) comprises in addition to the respective memory security domains (113a-c, 115a-c) of the one or more sets of security domains (111a-c, 113a-c, 115a-c) a real-time memory portion (114, 116) that is configured to be accessible from the real-time execution environment (112) and the respective processor security domains (111a-c) of the one or more sets of security domains (111a-c, 113a-c, 115a-c).

7. The communication device (110a) of any one of claims 1 to 6, wherein the routing scheme stored in the memory security domain (113, 115) of the first set of security domains (111a, 113a, 115a) is further based on information about a respective remaining power status of the respective neighbouring communication devices (110b-e).

8. The communication device (110a) of any one of claims 1 to 7, wherein the routing scheme stored in the memory security domain (113a, 115a) of the first set of security domains (111a, 113a, 115a) is further based on information about a respective geographical location of the respective neighbouring communication devices (110b-e).

9. The communication device (110a) of any one of claims 1 to 8, wherein the processor security domain (111a) of the first set of security domains (111a, 113a, 115a) is configured to determine the respective security credibility of a respective neighbouring communication device (110b-e) on the basis of an authentication token received from the respective neighbouring communication device (110b-e).

10. The communication device (110a) of any one of claims 1 to 9, wherein the communication device (110a) further comprises a basis scheduling plan stored in the memory security domain (113a, 115a) of the first set of security domains (111a, 113a, 115a), wherein the communication device (110a) is configured to be operated alternatively in a sleep mode and an active mode and wherein the basis scheduling plane defines one or more time windows, when the communication device (110a) operates in the active mode.

11. The communication device (110a) of any one of claims 1 to 10, wherein the communication device (110a) further comprises a rescheduling plan stored in the memory security domain (113a, 115a) of the first set of security domains (111a, 113a, 115a), wherein the communication device (110a) is configured to be operated alternatively in a sleep mode and an active mode and wherein the rescheduling plane defines one or more time windows, when the communication device operates in the active mode in order to be able to receive a new basis scheduling plane generated by a network management entity (151b).

12. A method (300) of operating a communication device (110a) for communicating data over a low power wide area, LPWA, communication network (100), the communication device (110a) comprising a processor (111) that processes data, a memory (113, 115) that stores data, a radio (117) that receives data from and transmits data to neighbouring communication devices (110b-e) and/or a base station (130), and a security system that operates one or more sets of logically separated security domains (111a-c, 113a-c, 115a-c), including a first set of security domains (111a, 113a, 115a), on the processor (111) and the memory (113, 115), wherein each set of security domains comprises a processor security domain (111a-c) and a memory security domain (113a-c, 115a-c); wherein the method (300) comprises:
routing (301) the data received from neighbouring communication devices (110b-e) to other neighbouring communication devices (110b-e) and/or the base station (130) of the LPWA communication network (100) on the basis of a routing scheme stored in the memory security domain (113a, 115a) of the first set of security domains (111a, 113a, 115a) and wherein the routing scheme is based on information about a respective security credibility of the respective neighbouring communication devices (110b-e) and
wherein the processor security domain (111a) of the first set of security domains (111a, 113a, 115a) dynamically adjusts the routing scheme stored in the memory security domain (113a, 115a) of the first set of security domains (111a, 113a, 115a) on the basis of information received from the neighbouring communication devices (110b-e) and/or a network management entity (151b) of the LPWA communication network (100).

13. A computer program product comprising program code for performing the method (300) of claim 12, when executed on a computer or a processor.

## Patentansprüche

1. Kommunikationsvorrichtung (110a) zum Kommunizieren von Daten über ein Niedrigenergie-Weitbereichs-LPWA-Kommunikationsnetz (100), wobei die Kommunikationsvorrichtung (110a) umfasst:
einen Prozessor (111), der dafür ausgelegt ist, Daten zu verarbeiten;
einen Speicher (113, 115) der dafür ausgelegt ist, Daten zu speichern;
ein Funkgerät (117), das dafür ausgelegt ist, Daten von benachbarten Kommunikationsvorrichtungen (110b-e) und/oder einer Basisstation (130) zu empfangen und an diese zu senden; und
ein Sicherheitssystem, das dafür ausgelegt ist, einen oder mehrere Sätze von logisch getrennten Sicherheitsdomänen (111a-c, 113a-c, 115a-c), einschließlich eines ersten Satzes von Sicherheitsdomänen (111a, 113a, 115a), in dem Prozessor (111) und dem Speicher (113, 115) zu betreiben, wobei jeder Satz von Sicherheitsdomänen eine Prozessorsicherheitsdomäne (111a-c) und eine Speichersicherheitsdomäne (113a-c, 115a-c) umfasst;
wobei die Prozessorsicherheitsdomäne (111a) des ersten Satzes von Sicherheitsdomänen (111a, 113a, 115a) dafür ausgelegt ist, die von benachbarten Kommunikationsvorrichtungen (110b-e) empfangenen Daten auf Basis des in der Speichersicherheitsdomäne (113a, 115a) des ersten Satzes von Sicherheitsdomänen (111a, 113a, 115a) gespeicherten Weiterleitungsschemas zu anderen benachbarten Kommunikationsvorrichtungen (110b-e) und/oder der Basisstation (130) des LPWA-Kommunikationsnetzes (100) weiterzuleiten, und wobei das Weiterleitungsschema auf Informationen über eine jeweilige Sicherheitsglaubwürdigkeit der jeweiligen benachbarten Kommunikationsvorrichtungen (110b-e) basiert und
wobei die Prozessorsicherheitsdomäne (111a) des ersten Satzes von Sicherheitsdomänen (111a, 113a, 115a) dafür ausgelegt ist, das in der Speichersicherheitsdomäne (113a, 115a) des ersten Satzes von Sicherheitsdomänen (111a, 113a, 115a) gespeicherte Weiterleitungsschema auf Basis von Informationen, die von den benachbarten Kommunikationsvorrichtungen (110b-e) und/oder einer Netzverwaltungseinheit (151b) des LPWA-Kommunikationsnetzes (100) empfangen wurden, dynamisch anzupassen.

2. Kommunikationsvorrichtung (110a) nach Anspruch 1, wobei die Prozessorsicherheitsdomäne (111a) und die Speichersicherheitsdomäne (113a, 115a) des ersten Satzes von Sicherheitsdomänen (111a, 113a, 115a) ferner dafür ausgelegt sind, miteinander zu interagieren, um die Kommunikationsvorrichtung (110a) in dem LPWA-Kommunikationsnetz (100) zu authentifizieren.

3. Kommunikationsvorrichtung (100a) nach Anspruch 1 oder 2, wobei das Sicherheitssystem ferner dafür ausgelegt ist, den Zugang des Funkgeräts (117) zu einem oder mehreren ausgewählten Sätzen des einen oder der mehreren Sätze von Sicherheitsdomänen (111a-c, 113a-c, 115a-c), einschließlich des ersten Satzes von Sicherheitsdomänen (111a, 113a, 115a), zu beschränken.

4. Kommunikationsvorrichtung (110a) nach Anspruch 1, wobei der eine oder die mehreren Sätze von logisch getrennten Sicherheitsdomänen (111a-c, 113a-c, 115a-c) einen zweiten Satz von Sicherheitsdomänen (111b, 113b, 115b) in dem Prozessor(111) und dem Speicher (113, 115) beinhalten und wobei die Prozessorsicherheitsdomäne (111b) und die Speichersicherheitsdomäne (113b, 115b) des zweiten Satzes von Sicherheitsdomänen (111b, 113b, 115b) dafür ausgelegt sind, miteinander zu interagieren, um die Kommunikationsvorrichtung (110a) in dem LPWA-Kommunikationsnetz (100) zu authentifizieren.

5. Kommunikationsvorrichtung (110a) nach einem der Ansprüche 1 bis 4, wobei der Prozessor (111) dafür ausgelegt ist, eine Echtzeitausführungsumgebung (112) basierend auf einem Echtzeitbetriebssystem zu implementieren und wobei das Sicherheitssystem dafür ausgelegt ist, die jeweiligen Prozessorsicherheitsdomänen (111a-c) des einen oder der mehreren Sätze von Sicherheitsdomänen (111a-c, 113a-c, 115a-c) parallel zu der Echtzeitausführungsumgebung (112) zu betreiben.

6. Kommunikationsvorrichtung (110a) nach Anspruch 5, wobei der Speicher (113, 115) zusätzlich zu den jeweiligen Speichersicherheitsdomänen (113a-c, 115a-c) des einen oder der mehreren Sätze von Sicherheitsdomänen (111a-c, 113a-c, 115a-c) einen Echtzeitspeicherabschnitt (114, 116) umfasst, der dafür ausgelegt ist, von der Echtzeitausführungsumgebung (112) und den jeweiligen Prozessorsicherheitsdomänen (111a-c) des einen oder der mehreren Sätze von Sicherheitsdomänen (111a-c, 113a-c, 115a-c) zugänglich zu sein.

7. Kommunikationsvorrichtung (110a) nach einem der Ansprüche 1 bis 6, wobei das in der Speichersicherheitsdomäne (113, 115) des ersten Satzes von Sicherheitsdomänen (111a, 113a, 115a) gespeicherte Weiterleitungsschema ferner auf Informationen über einen jeweiligen Restenergiestatus der jeweiligen benachbarten Kommunikationsvorrichtungen (110b-e) basiert.

8. Kommunikationsvorrichtung (110a) nach einem der Ansprüche 1 bis 7, wobei das in der Speichersicherheitsdomäne (113a, 115a) des ersten Satzes von Sicherheitsdomänen (111a, 113a, 115a) gespeicherte Weiterleitungsschema ferner auf Informationen über einen jeweiligen geographischen Standort der jeweiligen benachbarten Kommunikationsvorrichtungen (110b-e) basiert.

9. Kommunikationsvorrichtung (110a) nach einem der Ansprüche 1 bis 8, wobei die Prozessorsicherheitsdomäne (111a) des ersten Satzes von Sicherheitsdomänen (111a, 113a, 115a) dafür ausgelegt ist, die jeweilige Sicherheitsglaubwürdigkeit einer jeweiligen benachbarten Kommunikationsvorrichtung (110b-e) auf Basis eines Authentifizierungstokens zu bestimmen, das von der jeweiligen benachbarten Kommunikationsvorrichtung (110b-e) empfangen wird.

10. Kommunikationsvorrichtung (110a) nach einem der Ansprüche 1 bis 9, wobei die Kommunikationsvorrichtung (110a) ferner einen Basis-Terminisierungsplan umfasst, der in der Speichersicherheitsdomäne (113a, 115a) des ersten Satzes von Sicherheitsdomänen (111a, 113a, 115a) gespeichert ist, wobei die Kommunikationsvorrichtung (110a) dafür ausgelegt ist, alternativ in einem Schlafmodus und einem aktiven Modus betrieben zu werden und wobei der Basis-Terminisierungsplan ferner ein oder mehrere Zeitfenster definiert, wenn die Kommunikationsvorrichtung (110a) im aktiven Modus betrieben wird.

11. Kommunikationsvorrichtung (110a) nach einem der Ansprüche 1 bis 10, wobei die Kommunikationsvorrichtung (110a) ferner einen Neuterminisierungsplan umfasst, der in der Speichersicherheitsdomäne (113a, 115a) des ersten Satzes von Sicherheitsdomänen (111a, 113a, 115a) gespeichert ist, wobei die Kommunikationsvorrichtung (110a) dafür ausgelegt ist, alternativ in einem Schlafmodus und in einem aktiven Modus betrieben zu werden und wobei der Neuterminisierungsplan ein oder mehrere Zeitfenster definiert, wenn die Kommunikationsvorrichtung im aktiven Modus betrieben wird, um imstande zu sein, einen neuen Basis-Terminisierungsplan zu empfangen, der durch eine Netzverwaltungseinheit (151b) erzeugt wird.

12. Verfahren (300) zum Betreiben einer Kommunikationsvorrichtung (110a) zum Kommunizieren von Daten über ein Niedrigenergie-Weitbereichs-LPWA-Kommunikationsnetz (100), wobei die Kommunikationsvorrichtung (110a) umfasst: einen Prozessor (111), der Daten verarbeitet, einen Speicher (113, 115), der Daten speichert, ein Funkgerät (117), das Daten von benachbarten Kommunikationsvorrichtungen (110b-e) und/oder einer Basisstation (130) empfängt und an diese sendet, und ein Sicherheitssystem, das einen oder mehrere Sätze von logisch getrennten Sicherheitsdomänen (111a-c, 113a-c, 115a-c), einschließlich eines ersten Satzes von Sicherheitsdomänen (111a, 113a, 115a), in dem Prozessor (111) und dem Speicher (113, 115) betreibt, wobei jeder Satz von Sicherheitsdomänen eine Prozessorsicherheitsdomäne (111a-c) und eine Speichersicherheitsdomäne (113a-c, 115a-c) umfasst; wobei das Verfahren (300) umfasst:
Weiterleiten (301) der von benachbarten Kommunikationsvorrichtungen (110b-e) empfangenen Daten zu anderen benachbarten Kommunikationsvorrichtungen (110b-e) und/oder der Basisstation (130) des LPWA-Kommunikationsnetzes (100) auf Basis eines in der Speichersicherheitsdomäne (113a, 115a) des ersten Satzes von Sicherheitsdomänen (111a, 113a, 115a) gespeicherten Weiterleitungsschemas, und wobei das Weiterleitungsschema auf Informationen über eine jeweilige Sicherheitsglaubwürdigkeit der jeweiligen benachbarten Kommunikationsvorrichtungen (110b-e) basiert und wobei die Prozessorsicherheitsdomäne (111a) des ersten Satzes von Sicherheitsdomänen (111a, 113a, 115a) das in der Speichersicherheitsdomäne (113a, 115a) des ersten Satzes von Sicherheitsdomänen (111a, 113a, 115a) gespeicherte Weiterleitungsschema auf Basis von Informationen, die von benachbarten Kommunikationsvorrichtungen (110b-e) und/oder einer Netzverwaltungseinheit (151b) des LPWA-Kommunikationsnetzes (100) empfangen wurden, dynamisch anpasst.

13. Computerprogrammprodukt, umfassend einen Programmcode zum Durchführen des Verfahrens (300) nach Anspruch 12, wenn dieses in einem Computer oder einem Prozessor ausgeführt wird.

## Revendications

1. Dispositif de communication (110a) pour communiquer des données via un réseau de communication (100) étendu à faible puissance LPWA, soit Low Power Wide Area, dans lequel le dispositif de communication (110a) comprend :
un processeur (111) configuré pour traiter des données ;
une mémoire (113, 115) configurée pour stocker des données ;
une radio (117) configurée pour recevoir des données depuis, et transmettre des données vers, des dispositifs de communication voisins (110b-e) et/ou une station de base (130) ; et
un système de sécurité configuré pour contrôler un ou plusieurs ensembles de domaines de sécurité séparés logiquement (111a-c, 113a-c, 115a-c), comprenant un premier ensemble de domaines de sécurité (111a, 113a, 115a), sur le processeur (111) et la mémoire (113, 115), dans lequel chaque ensemble de domaines de sécurité comprend un domaine de sécurité de processeur (111a-c) et un domaine de sécurité de mémoire (113a-c, 115a-c) ;
dans lequel le domaine de sécurité de processeur (111a) du premier ensemble de domaines de sécurité (111a, 113a, 115a) est configuré pour router les données reçues de dispositifs de communication voisins (110b-e) vers d'autres dispositifs de communication voisins (110b-e) et/ou la station de base (130) du réseau de communication LPWA (100) sur base du schéma de routage stocké dans le domaine de sécurité de mémoire (113a, 115a) du premier ensemble de domaines de sécurité (111a, 113a, 115a), et dans lequel le schéma de routage est basé sur de l'information concernant une crédibilité de sécurité respective des dispositifs de communication voisins respectifs (110b-e), et
dans lequel le domaine de sécurité de processeur (111a) du premier ensemble de domaines de sécurité (111a, 113a, 115a) est configuré pour ajuster dynamiquement le schéma de routage stocké dans le domaine de sécurité de mémoire (113a, 115a) du premier ensemble de domaines de sécurité (111a, 113a, 115a) sur base d'information reçue des dispositifs de communication voisins (110b-e) et/ou d'une entité de gestion de réseau (151b) du réseau de communication LPWA (100).

2. Dispositif de communication (110a) selon la revendication 1, dans lequel le domaine de sécurité de processeur (111a) et le domaine de sécurité de mémoire (113a, 115a) du premier ensemble de domaines de sécurité (111a, 113a, 115a) sont en outre configurés pour interagir entre eux afin d'authentifier le dispositif de communication (110a) dans le réseau de communication LPWA (100).

3. Dispositif de communication (100a) selon la revendication 1 ou 2, dans lequel le système de sécurité est en outre configuré pour restreindre l'accès à la radio (117) à un ou plusieurs ensembles sélectionnés desdits un ou plusieurs ensembles de domaines de sécurité (111a-c, 113a-c, 115a-c), comprenant le premier ensemble de domaines de sécurité (111a, 113a, 115a).

4. Dispositif de communication (110a) selon la revendication 1, dans lequel lesdits un ou plusieurs ensembles de domaines de sécurité séparés logiquement (111a-c, 113a-c, 115a-c) comprend un deuxième ensemble de domaines de sécurité (111b, 113b, 115b) sur le processeur (111) et la mémoire (113, 115), et dans lequel le domaine de sécurité de processeur (111b) et le domaine de sécurité de mémoire (113b, 115b) du deuxième ensemble de domaines de sécurité (111b, 113b, 115b) sont configurés pour interagir entre eux afin d'authentifier le dispositif de communication (110a) dans le réseau de communication LPWA (100).

5. Dispositif de communication (110a) selon l'une quelconque des revendications 1 à 4, dans lequel le processeur (111) est configuré pour implémenter un environnement d'exécution en temps réel (112) sur base d'un système d'exécution en temps réel, et dans lequel le système de sécurité est configuré pour contrôler les domaines de sécurité de processeur respectifs (llla-c) desdits un ou plusieurs ensembles de domaines de sécurité (111a-c, 113a-c, 115a-c) parallèlement à l'environnement d'exécution en temps réel (112).

6. Dispositif de communication (110a) selon la revendication 5, dans lequel la mémoire (113, 115) comprend, en plus des domaines de sécurité de mémoire respectifs (113a-c, 115a-c) desdits un ou plusieurs ensembles de domaines de sécurité (111a-c, 113a-c, 115a-c), une portion de mémoire en temps réel (114, 116) qui est configurée pour être accessible depuis l'environnement d'exécution en temps réel (112) et les domaines de sécurité de processeur respectifs (111a-c) desdits un ou plusieurs ensembles de domaines de sécurité (111a-c, 113a-c, 115a-c).

7. Dispositif de communication (110a) selon l'une quelconque des revendications 1 à 6, dans lequel le schéma de routage stocké dans le domaine de sécurité de mémoire (113, 115) du premier ensemble de domaines de sécurité (111a, 113a, 115a) est en outre basé sur de l'information concernant un état d'énergie restante respectif des dispositifs de communication voisins respectifs (110b-e).

8. Dispositif de communication (110a) selon l'une quelconque des revendications 1 à 7, dans lequel le schéma de routage stocké dans le domaine de sécurité de mémoire (113a, 115a) du premier ensemble de domaines de sécurité (111a, 113a, 115a) est en outre basé sur de l'information concernant une position géographique respective des dispositifs de communication voisins respectifs (110b-e).

9. Dispositif de communication (110a) selon l'une quelconque des revendications 1 à 8, dans lequel le domaine de sécurité de processeur (111a) du premier ensemble de domaines de sécurité (111a, 113a, 115a) est configuré pour déterminer la crédibilité de sécurité respective d'un dispositif de communication voisin respectif (110b-e) sur base d'un jeton d'authentification reçu du dispositif de communication voisin respectif (110b-e).

10. Dispositif de communication (110a) selon l'une quelconque des revendications 1 à 9, dans lequel le dispositif de communication (110a) comprend en outre un plan de programmation de base stocké dans le domaine de sécurité de mémoire (113a, 115a) du premier ensemble de domaines de sécurité (111a, 113a, 115a), dans lequel le dispositif de communication (110a) est configuré pour fonctionner alternativement en mode de veille et en mode actif et dans lequel le plan de programmation de base définit une ou plusieurs fenêtres temporelles, quand le dispositif de communication (110a) fonctionne en mode actif.

11. Dispositif de communication (110a) selon l'une quelconque des revendications 1 à 10, dans lequel le dispositif de communication (110a) comprend en outre un plan de reprogrammation stocké dans le domaine de sécurité de mémoire (113a, 115a) du premier ensemble de domaines de sécurité (111a, 113a, 115a), dans lequel le dispositif de communication (110a) est configuré pour fonctionner alternativement en mode de veille et en mode actif, et dans lequel le plan de reprogrammation définit une ou plusieurs fenêtres temporelles, quand le dispositif de communication fonctionne en mode actif, de manière à pouvoir recevoir un nouveau plan de programmation de base généré par une entité de gestion de réseau (151b).

12. Procédé (300) de fonctionnement d'un dispositif de communication (110a) pour communiquer des données via un réseau de communication (100) étendu à faible puissance LPWA, le dispositif de communication (110a) comprenant un processeur (111) qui traite des données, une mémoire (113, 115) qui stocke des données, une radio (117) qui reçoit des données depuis, et transmet des données vers, des dispositifs de communication voisins (110b-e) et/ou une station de base (130), et un système de sécurité qui fonctionne sur un ou plusieurs ensembles de domaines de sécurité séparés logiquement (111a-c, 113a-c, 115a-c), comprenant un premier ensemble de domaines de sécurité (111a, 113a, 115a), sur le processeur (111) et la mémoire (113, 115), dans lequel chaque ensemble de domaines de sécurité comprend un domaine de sécurité de processeur (111a-c) et un domaine de sécurité de mémoire (113a-c, 115a-c) ; dans lequel le procédé (300) comprend :
le routage (301) des données reçues de dispositifs de communication voisins (110b-e) vers d'autres dispositifs de communication voisins (110b-e) et/ou la station de base (130) du réseau de communication LPWA (100) sur base d'un schéma de routage stocké dans le domaine de sécurité de mémoire (113a, 115a) du premier ensemble de domaines de sécurité (111a, 113a, 115a), et dans lequel le schéma de routage est basé sur de l'information concernant une crédibilité de sécurité respective des dispositifs de communication voisins respectifs (110b-e), et dans lequel le domaine de sécurité de processeur (111a) du premier ensemble de domaines de sécurité (111a, 113a, 115a) ajuste dynamiquement le schéma de routage stocké dans le domaine de sécurité de mémoire (113a, 115a) du premier ensemble de domaines de sécurité (111a, 113a, 115a) sur base d'information reçue des dispositifs de communication voisins (110b-e) et/ou d'une entité de gestion de réseau (151b) du réseau de communication LPWA (100).

13. Produit logiciel comprenant un code de programme pour mettre en œuvre le procédé (300) selon la revendication 12, lorsqu'il est exécuté sur un ordinateur ou un processeur.
